# EUROPEAN PATENT SPECIFICATION

(11) **EP 3 720 044 B1**
(45) Date of publication and mention of the grant of the patent: **27.07.2022**
(21) Application number: 19738679.0
(22) Date of filing: 08.01.2019
(51) Int. Cl.: H04L 9/40, G06Q 50/12, G07C 9/00, G07F 17/14, G06Q 20/32, G06Q 20/34, G06Q 20/38, G06Q 20/40, H04W 4/80, H04W 12/069

(54) **ELECTRONIC CERTIFICATE TRANSMISSION METHOD, APPARATUS AND DEVICE**
VERFAHREN, EINRICHTUNG UND VORRICHTUNG ZUR ÜBERTRAGUNG ELEKTRONISCHER ZERTIFIKATE
PROCÉDÉ, APPAREIL ET DISPOSITIF DE TRANSMISSION DE CERTIFICAT ÉLECTRONIQUE

(30) Priority: 12.01.2018 CN 201810028971
(43) Date of publication of application: 07.10.2020
(73) Proprietor: Advanced New Technologies Co., Ltd., George Town, Grand Cayman KY1-9008 (KY)
(72) Inventor: LI, Jing, Hangzhou, Zhejiang 311121 (CN); FENG, Chunpei, Hangzhou, Zhejiang 311121 (CN); YANG, Wenbo, Hangzhou, Zhejiang 311121 (CN); HUANG, Mian, Hangzhou, Zhejiang 311121 (CN)
(74) Representative: Goddar, Heinz J.
(86) International application number: PCT/CN2019/070812
(87) International publication number: WO 2019/137362

(56) References cited:
- EP-A2- 2 736 217
- WO-A1-2013/093313
- CN-A- 101 518 038
- CN-A- 101 751 701
- CN-A- 102 792 328
- US-A1- 2014 120 906
- US-A1- 2014 351 335
- US-A1- 2015 278 780

## Description

### TECHNICAL FIELD

This application relates to the field of computer technologies, and in particular, to an electronic certificate transmission method, apparatus and device.

### BACKGROUND

With the development and popularization of information technologies, an information-based digital electronic certificate (such as a digital room card) has been widely used.

Currently, a business provider may provide a corresponding electronic certificate to a user, so that the user can obtain a business service provided by the business provider. Taking a digital room card as an example, when a user checks into a hotel, the hotel may send a digital room card to a terminal device used by the user, and the user may directly use the terminal device to perform a card swipe operation on a smart lock of a corresponding room to enter the hotel room.

However, in a scenario in which multiple users check into a same room, it is often inconvenient to use only one terminal device that carries an electronic certificate.

Based on the existing technologies, a more effective electronic certificate information processing method is required.

US 2015/0278780 A1 (Vaidyanathan et al.) discloses a system including a computer memory storing user account information comprising artifacts (such as credit cards, debit cards, offers, coupons, receipts, loyalty cards, and the like) of a user account that are shared with one or more other users. The system also includes a computer processor configured to perform the following operations: receiving, from a first user via a first user device, a selection of one or more artifacts to be shared from an account of the first user; receiving, from the first user via the first user device, a selection of a recipient with whom the artifact(s) are to be shared; and populating the artifact(s) in one or more accounts of the recipient. In an example, the recipient is selected using a contact list on the first user's device.

### SUMMARY

According to aspects of the present invention there is provided methods, computer program products and devices as defined in the accompanying claims. Embodiments of this specification provide an electronic certificate transmission method, apparatus and device, to resolve a problem that it is inconvenient to obtain a business service based on an electronic certificate in some business scenarios.

The following technical solutions are adopted in the embodiments of this specification:

On a first user side, an embodiment of this specification provides an electronic certificate transmission method, including:
receiving a sharing operation for an electronic certificate, where the electronic certificate is sent by a business server to a first user in advance;
obtaining user information of a second user corresponding to the sharing operation; and
sending the obtained user information and identifier information of the electronic certificate to the business server, for the business server to perform matching on the user information according to pre-stored business information and send the electronic certificate to the second user after the matching succeeds.

On a business server side, an embodiment of this specification further provides an electronic certificate transmission method, including:
receiving, by a business server, a verification request sent by a first user, where the verification request carries at least user information of a second user;
performing verification on the user information according to pre-stored business information; and
when the verification succeeds, determining a to-be-sent electronic certificate according to identifier information carried in the verification request and sending the electronic certificate to the second user.

Correspondingly, on the first user side, an embodiment of this specification further provides an electronic certificate transmission apparatus, including:
an operation receiving module, configured to receive a sharing operation for an electronic certificate, where the electronic certificate is sent by a business server to a first user in advance;
an information obtaining module, configured to obtain user information of a second user corresponding to the sharing operation; and
a sending module, configured to send the obtained user information and identifier information of the electronic certificate to the business server, for the business server to perform matching on the user information according to pre-stored business information and send the electronic certificate to the second user after the matching succeeds.

On the business server side, an embodiment of this specification further provides an electronic certificate transmission apparatus, including:
a request receiving module, configured to receive a verification request sent by a first user, where the verification request carries at least user information of a second user;
a verification module, configured to perform verification on the user information according to pre-stored business information; and
a certificate sending module, configured to: when the verification succeeds, determine a to-be-sent electronic certificate according to identifier information carried in the verification request and send the electronic certificate to the second user.

Correspondingly, on the first user side, an embodiment of this specification further provides an electronic certificate transmission device, including: a processor and a memory, where
the memory stores an electronic certificate transmission program; and
the processor invokes the electronic certificate transmission program stored in the memory and performs the following operations:
receiving a sharing operation for an electronic certificate, where the electronic certificate is sent by a business server to a first user in advance;
obtaining user information of a second user corresponding to the sharing operation; and
sending the obtained user information and identifier information of the electronic certificate to the business server, for the business server to perform matching on the user information according to pre-stored business information and send the electronic certificate to the second user after the matching succeeds.

On the business server side, an embodiment of this specification further provides an electronic certificate transmission device, including: a processor and a memory, where
the memory stores an electronic certificate transmission program; and
the processor invokes the electronic certificate transmission program stored in the memory and performs the following operations:
receiving a verification request sent by a first user, where the verification request carries at least user information of a second user;
performing verification on the user information according to pre-stored business information; and
when the verification succeeds, determining a to-be-sent electronic certificate according to identifier information carried in the verification request and sending the electronic certificate to the second user.

At least one of the foregoing technical solutions adopted in the embodiments of this specification can achieve the following beneficial effects:
in a process of obtaining a business service, a first user who has obtained an electronic certificate may share the electronic certificate. In particular, the first user may perform, using a terminal through short-range communication, information communication with a terminal used by a second user to obtain user information of the second user. Then, the first user may simultaneously send the obtained user information of the second user and identifier information of the electronic certificate of the first user to a business server providing the electronic certificate. In this way, the business server may perform verification on the user information of the second user and deliver the same electronic certificate to the second user after the verification succeeds, thereby achieving sharing of the electronic certificate. In the foregoing manner, the electronic certificate can be shared to meet requirements of multiple users for a business service, and security of the electronic certificate can also be effectively ensured.

### BRIEF DESCRIPTION OF THE DRAWINGS

The accompanying drawings described herein are used for providing further understanding for this specification and constitute a part of this specification. Exemplary embodiments of this specification and descriptions thereof are used for explaining this specification and do not constitute an improper limitation to this specification. In the figures:
FIG. 1 is a schematic diagram of an actual application scenario on which an electronic certificate transmission method is based, according to an embodiment of this specification.
FIG. 2 is a schematic diagram of a transmission process of an electronic certificate based on a first user side, according to an embodiment of this specification.
FIG. 3 is a schematic diagram of a transmission process of an electronic certificate based on a business server side, according to an embodiment of this specification.
FIG. 4a to 4c are schematic diagrams of a transmission process of a digital room card in actual applications, according to an embodiment of this specification.
FIG. 5 is a schematic structural diagram of an electronic certificate transmission apparatus based on a first user side, according to an embodiment of this specification.
FIG. 6 is a schematic structural diagram of an electronic certificate transmission apparatus based on a business server side, according to an embodiment of this specification.

### DETAILED DESCRIPTION OF THE INVENTION

To make the objectives, technical solutions, and advantages of this specification clearer, the following clearly and completely describes the technical solutions of this specification with reference to specific embodiments of this specification and the corresponding accompanying drawings. Apparently, the described embodiments are only some embodiments rather than all the embodiments of this specification. All other embodiments obtained by a person of ordinary skill in the art based on the embodiments of this specification without creative efforts shall fall within the protection scope of this specification.

In a current business scenario, a business provider usually sends a business-related electronic certificate uniquely to only a user sending a business request. However, for some business scenarios, multiple users may jointly obtain a same business service. In this case, multiple users can use only one electronic certificate to obtain the business service, which is inconvenient.

For example, when a user checks into a hotel, the hotel usually sends a digital room card of a specified room to a booking user, and the booking user may use the digital room card through a terminal device, and directly use the digital room card to unlock a smart door lock of a corresponding room to enter the room. However, if multiple users check into the same room, other occupants can only use the digital room card on the terminal device of the booking user to perform a card swiping operation.

Therefore, an embodiment of this specification provides an information processing method based on an electronic certificate. In some business scenarios, based on a sharing operation of a holder of an electronic certificate, the same electronic certificate is sent to one or more verified users, so that multiple users who jointly obtain a same business service can obtain the same electronic certificate.

It should be noted that, in one or more embodiments of this specification the electronic certificate may include at least: a digital door card, a bus card, a bank card, a membership card, a coupon, a movie ticket, a discount coupon, and/or the like. The electronic certificate may be delivered by a server of the business provider to a terminal device used by the user.

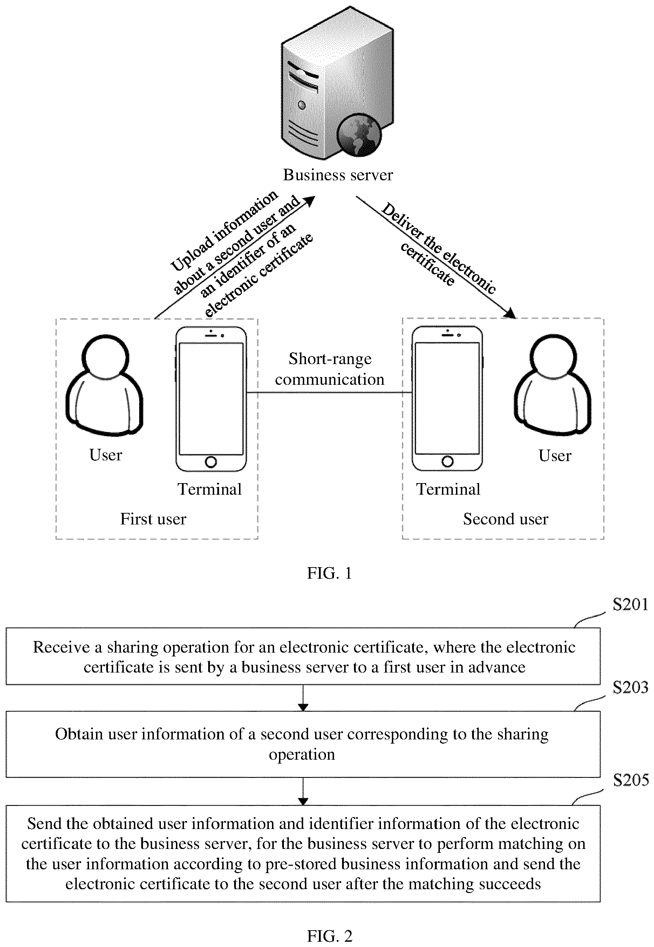

FIG. 1 is a schematic diagram of an application scenario on which an information processing method is based, according to an embodiment of this specification.

In FIG. 1, a business server can provide an electronic certificate for a user. Generally, the business server is a server in a back-end of a business provider. The business provider herein may include but is not limited to merchants such as a shop, a hotel, a restaurant, a cafe, a gas station, and a cinema, or service providers such as a telecom operator and a website.

In some embodiment of this specification, the business server may alternatively be a server of a business platform. In other words, business services of all business providers are aggregated on the business platform, and a user may obtain business services provided by different business providers through the business platform. Correspondingly, the electronic certificate required by the user is provided by the server of the business platform.

The business server may adopt an architecture such as a single server, a clustered server, or a distributed server, which is not specifically limited herein.

A first user in FIG. 1 has obtained an electronic certificate and may share the electronic certificate with another second user. This may be specifically implemented through a terminal used by the first user.

The second user in FIG. 1 can receive the electronic certificate shared by the first user. Similarly, in specific implementation, the second user may also receive the shared electronic certificate through a terminal used by the second user. Generally, the second user and the first user jointly obtain a same business service, for example, a check-in user (the second user) who shares a same room with a booking user (the first user).

It should be noted herein that in some embodiments of this specification, the first user and the second user may be understood as individual users. In some other embodiments of this specification, the first user and the second user also include an individual user, a terminal device used by a user, an account used by the user, and the like. This should not constitute a limitation on this specification.

The terminal includes but is not limited to a smartphone, a smart watch, a tablet, a smart wearable device, or the like. Certainly, in some embodiments of this specification, the terminal usually has a short-range communication function such as near field communication (NFC), Bluetooth communication, or radio frequency identification (RFID).

In addition, in the application scenario shown in FIG. 1, there is usually one first user, and there may be at least one second user.

Based on the architecture shown in FIG. 1, the technical solutions provided in the embodiments of this specification are described in detail below.

Based on a first user side, an embodiment of this specification provides an information processing method based on an electronic certificate. As shown in FIG. 2, the method specifically includes the following steps:

Step S201: receive a sharing operation for an electronic certificate, where the electronic certificate is sent by a business server to a first user in advance.

In this embodiment of this specification, the first user may obtain the electronic certificate in a plurality of manners, and two common implementations are used as examples. In a first manner (an online manner), the first user may access a business interface (usually in a form of an application page or a web page) of the business server through a corresponding application or browser, and make a business service reservation in the business interface. In a process of the reservation, the first user usually needs to provide user information such as a mobile phone number and a business account. Therefore, the business server may send the corresponding electronic certificate to the first user based on the user information provided by the first user.

In another manner (an offline manner), the first user may obtain a business service offline (for example, check into a hotel). Similarly, the first user may provide user information of the first user for a business provider. Further, the business provider may upload the user information to the business server, so that the business server generates the electronic certificate and sends the electronic certificate to the first user.

If the first user has obtained the electronic certificate, the electronic certificate may be shared with other users who obtain the same business service, that is, the first user may send the sharing operation for the electronic certificate.

For the manner of sending the sharing operation, the first user may use a terminal to enter a corresponding sharing interface and perform the sharing operation. Adopted manners specifically include: clicking, dragging, flicking, pressing, or the like. In this embodiment of this specification, when the first user enters the sharing interface through the terminal, the terminal may trigger a short-range communication function such as NFC, Bluetooth communication, or RFID.

Step S203: obtain user information of a second user corresponding to the sharing operation.

As described above, the terminal used by the first user may obtain the user information of the second user through a terminal used by the second user with the support of the foregoing short-range communication technology (the terminals usually need to be within a communication range of each other). The user information described herein may be considered as a mobile phone number, an account name, an electronic business card, or an identity number of the second user.

Step S205: send the obtained user information and identifier information of the electronic certificate to the business server, for the business server to perform matching on the user information according to pre-stored business information and send the electronic certificate to the second user after the matching succeeds.

In this step, the identifier information of the electronic certificate may specifically include a number, an ID, a bar flag bit, or the like of the electronic certificate. Generally, the identifier information is generated by the business server, and the identifier information can uniquely identify an electronic certificate. In this case, if verification on the user information succeeds, the business server may search for the same electronic certificate based on the identifier information and send the electronic certificate to the second user.

As described above, to perform sharing operation for the electronic certificate, the first user needs to access an interface of the electronic certificate on the terminal. In this case, the terminal establishes a network connection with the business server. In a feasible manner of this embodiment of this specification, the terminal may send the obtained user information of the second user and the identifier information of the electronic certificate of the first user to the business server through the network connection in a form of a verification request.

It can be learned that, in this embodiment of this specification, instead of directly sharing the electronic certificate with the second user, the first user delivers the same electronic certificate to the second user through the business server.

According to the foregoing steps, in a process of obtaining a business service, a first user who has obtained an electronic certificate may share the electronic certificate. In particular, the first user may perform, using a terminal through short-range communication, information communication with a terminal used by a second user to obtain user information of the second user. Then, the first user may simultaneously send the obtained user information of the second user and identifier information of the electronic certificate of the first user to a business server providing the electronic certificate. In this way, the business server may perform verification on the user information of the second user and deliver the same electronic certificate to the second user after the verification succeeds, thereby achieving sharing of the electronic certificate. In the foregoing manner, the electronic certificate can be shared to meet requirements of multiple users for a business service, and security of the electronic certificate can also be effectively ensured.

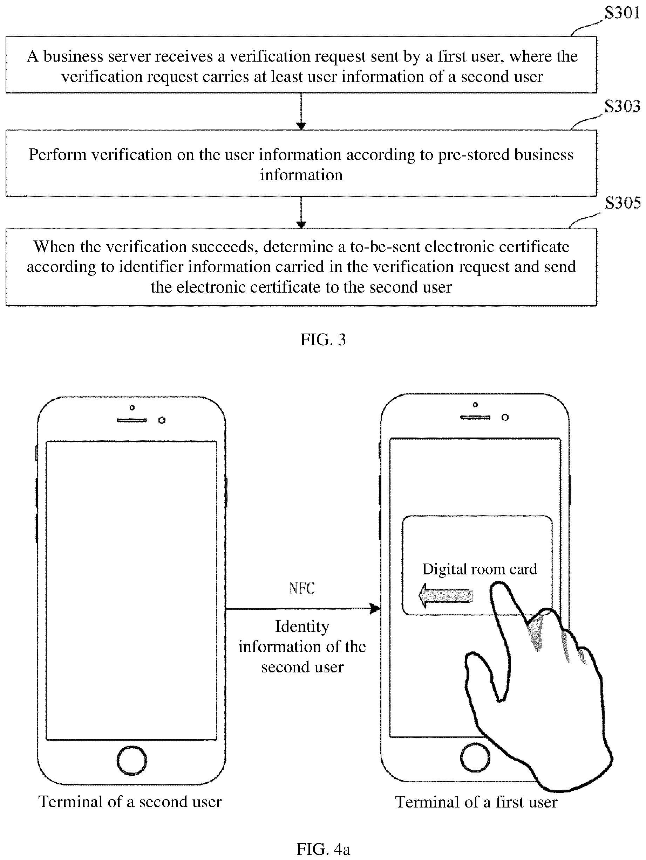

The above is based on the description on the first user side. On a business server side, an embodiment of this specification further provides an electronic certificate transmission method. As shown in FIG. 3, the method specifically includes the following steps:

Step S301: a business server receives a verification request sent by a first user, where the verification request carries at least user information of a second user.

As described above, the first user may send the obtained user information of the second user and identifier information of an electronic certificate of the first user to the business server in a form of the verification request.

Step S303: perform verification on the user information according to pre-stored business information.

In an actual application scenario, the business server may generally store corresponding business information in advance according to a business request of a user. The pre-stored business information includes user information of each user who needs to use a business service.

The business information herein may include: a business type, a business identifier (a business order number, a serial number), business provider information, information about a user using the business service, and the like.

Certainly, in a possible manner (a business reservation manner), the first user may make a business reservation in advance (for example, reservation a hotel, a movie ticket, or a concert ticket). In a process of the service reservation, the user may enter the user information of the related second user (for example, user information of multiple occupants or user information of multiple attendees). Further, the business server may store the foregoing user information.

In another possible manner (a non-business reservation manner), the second user may perform business registration/check in before obtaining the business service. For example, in a hotel check-in scenario, the second user may register at a hotel front desk, and correspondingly the hotel may upload the user information registered by the user to the business server.

In the foregoing two manners, user information of a user who can obtain the business service is stored in the business server, and the business server may perform verification on the user information carried in the verification request sent by the first user. In particular, if the user information carried in the verification request matches the pre-stored user information, the verification succeeds; otherwise, the verification fails.

Step S305 may be performed when the verification succeeds. It can be understood that if the verification fails, the business server does not send the electronic certificate to the second user.

Step S305: when the verification succeeds, a to-be-sent electronic certificate is determined according to identifier information carried in the verification request, and the electronic certificate is sent to the second user.

The electronic certificate of the first user is generated by the business server. In this case, the business server may find the corresponding electronic certificate according to the identifier information and send the electronic certificate to the second user.

It should be noted herein that the user information of the second user carried in the verification request may specifically include account information, a mobile phone number, and the like of the second user. Therefore, the business server may send the electronic certificate to the second user according to the user information.

On a second user side, a terminal used by the second user may send the user information of the second user to a terminal used by the first user through short-range communication, and the second user may subsequently obtain the electronic certificate of the first user provided by the business server. For details of the process, reference is made to the foregoing content, and the details are not described herein again.

The following uses a scenario in which the first user and the second user check into a hotel as an example for illustration.

In this scenario, it is assumed that the first user has obtained an electronic certificate. To conveniently share a digital room card (i.e., the electronic certificate), the first user and the second user may use mobile phones to perform information communication through an NFC function.

As shown in FIG. 4a, the first user may use a mobile phone to enter an interface of the digital room card, and send a sharing operation for the digital room card in the interface (slide the digital room card on the interface). In this case, the mobile phone of the first user may obtain user information such as a mobile phone number and an account name of the second user from a terminal of the second user with the support of the NFC function.

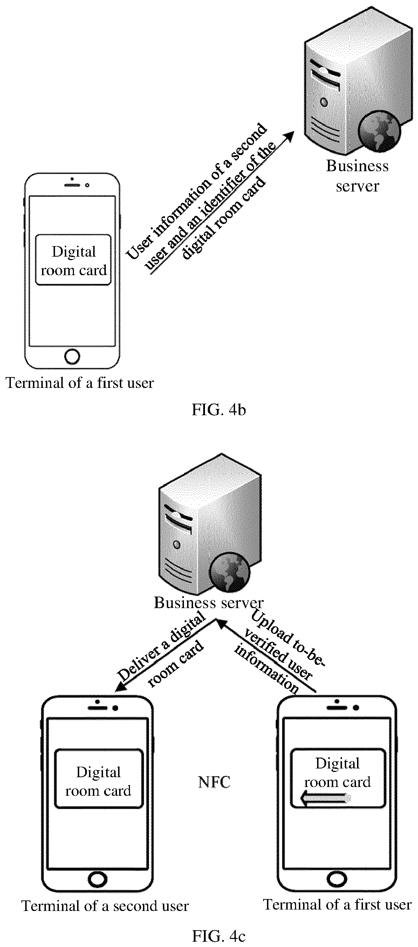

In this case, as shown in FIG. 4b, the mobile phone used by the first user may send identifier information of the digital room card and the user information of the second user to the business server. The business server performs verification according to the pre-recorded business information.

As shown in FIG. 4c, after the verification succeeds, the server may send the digital door card of the first user to the second user (either to a business account of the second user or to a mobile phone of the second user according to the mobile phone number of the second user).

It should be noted that in actual applications, the foregoing process is non-perceptive to the second user. In other words, in a short-range communication range, after the first user sends the sharing operation for the digital room card through the mobile phone, the mobile phone used by the second user can immediately display that the digital room card is obtained.

Then, the second user may use the digital room card through the mobile phone of the second user, that is, the second user may use the mobile phone to perform a card swipe operation (based on the NFC function) on a smart lock of a corresponding room, and may smoothly unlock the door.

Certainly, for other electronic certificates that can be shared (such as a movie ticket, a coupon, and a discount card), the method in this embodiment of this specification may also be adopted, and the details are not described herein again.

It can be learned from the foregoing content that according to the electronic certificate transmission method in this embodiment of this specification, a same electronic certificate can be conveniently shared among multiple users who obtain a same business service. Compared with traditional short-distance information transmission, the sharing manner in the foregoing method is more secure and reliable.

The above is the electronic certificate transmission method provided in the embodiments of this specification. Based on a same idea, an embodiment of this specification further provides a corresponding electronic certificate transmission apparatus.

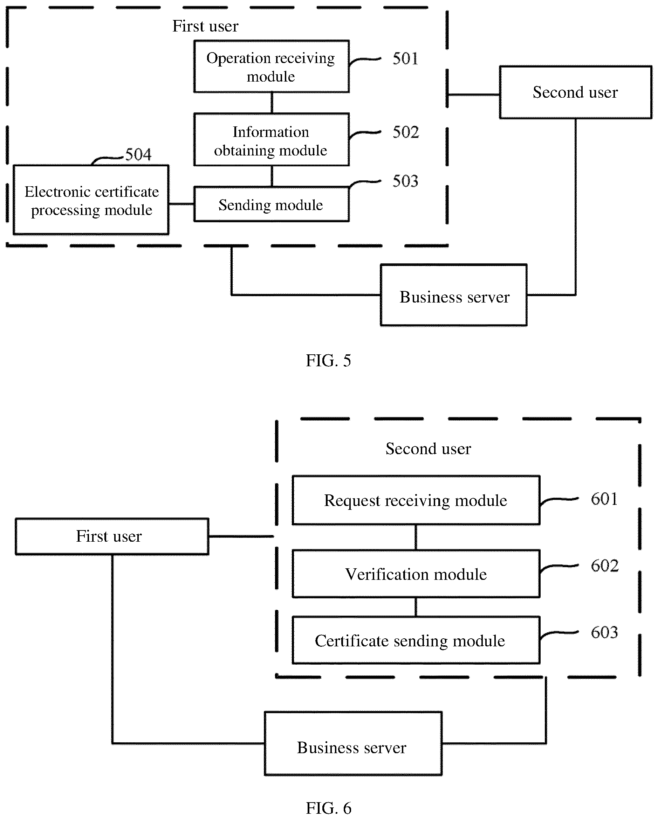

In particular, on a first user side, the electronic certificate transmission apparatus provided in this embodiment of this specification is shown in FIG. 5. The apparatus includes:

an operation receiving module 501 configured to receive a sharing operation for an electronic certificate, where the electronic certificate is sent by a business server to a first user in advance;

an information obtaining module 502 configured to obtain user information of a second user corresponding to the sharing operation; and

a sending module 503 configured to send the obtained user information and identifier information of the electronic certificate to the business server, for the business server to perform matching on the user information according to pre-stored business information and send the electronic certificate to the second user after the matching succeeds.

Further, the apparatus further includes: an electronic certificate processing module 504 configured to send, to the business server, a business request carrying user information of the first user; and receive the electronic certificate generated and delivered by the business server based on the user information.

The information obtaining module 502 obtains the user information of the second user corresponding to the sharing operation through short-range communication.

The short-range communication includes at least: near field communication, Bluetooth communication, radio frequency identification communication, or infrared communication. The user information includes at least: a mobile phone number or a business account.

The information obtaining module 502 determines a user in a short-range communication range as the second user corresponding to the sharing operation; and obtains the user information of the second user through the short-range communication.

Based on the apparatus shown in FIG. 5, in actual applications, the apparatus may be implemented by a hardware device (such as a terminal device). In particular, the device includes: a processor and a memory, where
the memory stores an electronic certificate transmission program; and
the processor invokes the electronic certificate transmission program stored in the memory and performs the following operations:
receiving a sharing operation for an electronic certificate, where the electronic certificate is sent by a business server to a first user in advance;
obtaining user information of a second user corresponding to the sharing operation; and
sending the obtained user information and identifier information of the electronic certificate to the business server, for the business server to perform matching on the user information according to pre-stored business information and send the electronic certificate to the second user after the matching succeeds.

On a business server side, an embodiment of this specification further provides an electronic certificate transmission apparatus. As shown in FIG. 6, the apparatus includes:
a request receiving module 601 configured to receive a verification request sent by a first user, where the verification request carries at least user information of a second user;
a verification module 602 configured to perform verification on the user information according to pre-stored business information; and
a certificate sending module 603 configured to: when the verification succeeds, determine a to-be-sent electronic certificate according to identifier information carried in the verification request and send the electronic certificate to the second user.

The verification module 602 performs matching and verification on the user information of the second user according to user information included in the pre-stored business information; and if the user information of the second user is consistent with the pre-stored user information, determines that the verification succeeds; or if the user information of the second user is not consistent with the pre-stored user information, determines that the verification fails.

The certificate sending module 603 sends, when the user information of the second user includes a mobile phone number, the electronic certificate to the mobile phone number in a form of a short message; and
sends, when the user information of the second user includes a business account, the electronic certificate to the business account.

Based on the apparatus shown in FIG. 6, in actual applications, the apparatus may be implemented by a hardware device (such as a terminal device/a server). In particular, the device includes: a processor and a memory, where
the memory stores an electronic certificate transmission program; and
the processor invokes the electronic certificate transmission program stored in the memory and performs the following operations:
receiving a verification request sent by a first user, where the verification request carries at least user information of a second user;
performing verification on the user information according to pre-stored business information; and
when the verification succeeds, determining a to-be-sent electronic certificate according to identifier information carried in the verification request and sending the electronic certificate to the second user.

The embodiments in this specification are all described in a progressive manner, for same or similar parts in the embodiments, refer to these embodiments, and descriptions of each embodiment focus on a difference from other embodiments. Especially, apparatus, device, and medium embodiments are basically similar to a method embodiment, and therefore are described briefly; for related parts, refer to partial descriptions in the method embodiment, and details are not described herein again.

So far, particular embodiments of the subject have been described. Other embodiments fall within the scope of the appended claims. In some embodiments, the actions recorded in the claims may be performed in different sequences and an expected result may still be achieved. In addition, the processes depicted in the accompanying drawings do not necessarily require specific sequences or consecutive sequences to achieve an expected result. In some embodiments, multitask processing and parallel processing may be advantageous.

In the 1990s, improvements of a technology can be clearly distinguished between hardware improvements (for example, improvements to a circuit structure such as a diode, a transistor, a switch, etc.) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler" software, which is similar to the software compiler used to write programs. Original code before compiling is also written in a specific programming language, which is referred to as Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL), etc. Currently, Very-High-Speed Integrated Circuit Hardware Description Language (VHDL) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner, for example, the controller can take the form of, for example, a microprocessor or processor and a computer-readable medium storing computer-readable program code (for example, software or firmware) executable by the processor, a logic gate, a switch, an application-specific integrated circuit (ASIC), a programmable logic controller and an embedded microcontroller. Examples of the controller include, but are not limited to, the following microcontrollers: ARC 625D, Atmel AT91SAM, Microchip PIC18F26K20 and Silicone Labs C8051F320. The memory controller can also be implemented as part of the memory control logic. A person skilled in the art will also appreciate that, in addition to implementing the controller in the form of pure computer-readable program code, it is also possible to implement the controller in the form of a logic gate, switch, application-specific integrated circuit, programmable logic controller, and embedded microcontroller and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments can be specifically implemented by a computer chip or an entity or implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. Certainly, in an implementation of this application, the function of the units may be implemented in a same piece of or multiple pieces of software and/or hardware.

A person skilled in the art should understand that the embodiments of this specification may be provided as a method, a system, or a computer program product. Therefore, this specification may use a form of hardware only embodiments, software only embodiments, or embodiments with a combination of software and hardware. Moreover, this specification may use a form of a computer program product that is implemented on one or more computer-usable storage media (including but not limited to a disk memory, a CD-ROM, an optical memory, and the like) that include computer-usable program code.

This specification is described with reference to the flowchart and/or block diagram of the method, device (system), and computer program product of the embodiments of this specification. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the general-purpose computer or the processor of another programmable data processing device.

These computer program instructions may also be stored in a computer readable memory that can guide a computer or another programmable data processing device to work in a specific manner, so that the instructions stored in the computer readable memory generate a product including an instruction apparatus, where the instruction apparatus implements functions specified in one or more procedures in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more procedures in the flowcharts and/or one or more blocks in the block diagrams.

In a typical configuration, the computer device includes one or more processors (CPUs), an input/output interface, a network interface, and a memory.

The memory may include a form such as a persistent memory, a random-access memory (RAM) and/or a non-volatile memory of computer readable media, for example, a read-only memory (ROM) or a flash memory (RAM). The memory is an example of the computer readable medium.

The computer readable medium includes a persistent medium and a non-persistent medium, a removable medium and a non-removable medium, which may implement storage of information by using any method or technology. The information may be a computer readable instruction, a data structure, a module of a program or other data. Examples of computer storage media include but are not limited to a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette magnetic tape, tape and disk storage or other magnetic storage device or any other non-transmission media that may be configured to store information that a computing device can access. Based on the definition in this disclosure, the computer-readable medium does not include transitory computer readable media (transitory media), such as a modulated data signal and a carrier.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one" does not exclude other same elements in the process, method, article or device which include the element.

A person skilled in the art should understand that the embodiments of this specification may be provided as a method, a system, or a computer program product. Therefore, this specification may use a form of hardware only embodiments, software only embodiments, or embodiments with a combination of software and hardware. In addition, this specification may use a form of a computer program product implemented on one or more computer-usable storage media (including but not limited to a disk memory, a CD-ROM, an optical memory, and the like) including computer-usable program code.

This specification can be described in the general context of computer executable instructions executed by a computer, for example, a program module. Generally, the program module includes a routine, a program, an object, a component, a data structure, and the like for executing a particular task or implementing a particular abstract data type. This specification can also be practiced in a distributed computing environment in which tasks are performed by remote processing devices that are connected through a communication network. In a distributed computing environment, the program module may be located in both local and remote computer storage media including storage devices.

The embodiments in this specification are all described in a progressive manner, for same or similar parts in the embodiments, refer to these embodiments, and descriptions of each embodiment focus on a difference from other embodiments. Especially, a system embodiment is basically similar to a method embodiment, and therefore is described briefly; for related parts, reference may be made to partial descriptions in the method embodiment.

The foregoing descriptions are merely embodiments of this specification and are not intended to limit this specification. For a person skilled in the art, various modifications and variations can be made to this specification.

## Claims

1. A method, performed by a terminal of a first user, for transmitting a digital room card to a terminal of a second user, the method comprising:
receiving (S201), via a sharing interface displayed on the terminal of the first user, a sharing operation for sharing the digital room card with the second user, wherein the digital room card is sent by a business server to the terminal of the first user in advance and enables to unlock a smart door lock of a corresponding room,
in response, obtaining (S203) user information of the second user through short-range communication, comprising performing, through the short-range communication, information communication with the terminal of the second user to obtain the user information of the second user, wherein the short-range communication comprises near field communication, Bluetooth communication, radio frequency identification communication, or infrared communication and the user information of the second user comprises a mobile phone number, a business account, or identity certificate information; and
sending (S205) a verification request comprising the obtained user information of the second user and identifier information of the digital room card to the business server, for the business server to perform a verification that the second user is a verified user that is allowed to use the digital room card to unlock the smart door lock of the room, the verification comprising matching on the user information of the second user according to pre-stored business information, and send the digital room card to the terminal of the second user after the verification succeeds.

2. The method according to claim 1, wherein the terminal of the first user obtains in advance the digital room card sent by the business server through the following approach:
sending, to the business server, a business request carrying user information of the first user; and
receiving the digital room card generated and delivered by the business server based on the user information of the first user.

3. The method according to claim 1, wherein the obtaining the user information of the second user through short-range communication specifically comprises:
determining a user in a short-range communication range as the second user corresponding to the sharing operation; and
obtaining the user information of the second user through the short-range communication.

4. A method, performed by a business server, for transmitting a digital room card associated with a first user to a terminal of a second user comprising:
receiving (S301), from a terminal of the first user, a verification request carrying an identifier information of the digital room card and user information of the second user, wherein the digital room card is sent by the business server to the terminal of the first user in advance and enables to unlock a smart door lock of a corresponding room, wherein the user information of the second user is obtained by the terminal of the first user through short-range communication with the terminal of the second user, wherein the short-range communication comprises near field communication, Bluetooth communication, radio frequency identification communication, or infrared communication and the user information of the second user comprises a mobile phone number, a business account, or identity certificate information;
performing (S303) a verification that the second user is a verified user that is allowed to use the digital room card to unlock the smart door lock of the room, the verification comprising matching on the user information of the second user according to pre-stored business information; and
when the verification succeeds, determining (S305) the digital room card identified according to the identifier information carried in the verification request and sending the digital room card to the terminal of the second user.

5. The method according to claim 4, wherein the performing the verification that the second user is the verified user that is allowed to use the digital room card to unlock the smart door lock of the room comprises:
if the user information of the second user is consistent with the pre-stored user information, determining that the verification succeeds; and
if the user information of the second user is not consistent with the pre-stored user information, determining that the verification fails.

6. The method according to claim 4, wherein the sending the digital room card to the terminal of the second user specifically comprises:
sending, when the user information of the second user comprises a mobile phone number, the digital room card to the mobile phone number in a form of a short message.

7. The method according to claim 4, wherein the sending the digital room card to the terminal of the second user specifically comprises:
sending, when the user information of the second user comprises a business account, the digital room card to the business account.

8. A computer program product for transmitting a digital room card, the computer program product comprising instructions, which, when the computer program is executed by a terminal device, cause the terminal device to carry out the method of any of claims 1 to 3.

9. A terminal device comprising a processor configured to carry out the method of any of claims 1 to 3.

10. A computer program product for transmitting a digital room card, the computer program product comprising instructions, which, when the computer program is executed by a server, cause the server to carry out the method of any of claims 4 to 7.

11. A server comprising a processor configured to carry out the method of any of claims 4 to 7.

## Patentansprüche

1. Verfahren, das durch ein Endgerät eines ersten Anwenders ausgeführt wird, zum Senden einer digitalen Zimmerkarte an ein Endgerät eines zweiten Anwenders, wobei das Verfahren Folgendes umfasst:
Empfangen (S201) einer Operation der gemeinsamen Nutzung zur gemeinsamen Nutzung der digitalen Zimmerkarte mit dem zweiten Anwender über eine Schnittstelle zur gemeinsamen Nutzung, die auf dem Endgerät des ersten Anwenders angezeigt wird, wobei die digitale Zimmerkarte durch einen Geschäftsserver im Voraus an das Endgerät des ersten Anwenders gesendet wird und ermöglicht, ein intelligentes Türschloss eines entsprechenden Zimmers zu entriegeln,
in Reaktion darauf Erhalten (S203) von Anwenderinformationen des zweiten Anwenders über kurzreichweitige Kommunikation, was das Ausführen einer Informationskommunikation mit dem Endgerät des zweiten Anwenders über die kurzreichweitige Kommunikation, um die Anwenderinformationen des zweiten Anwenders zu erhalten, umfasst, wobei die kurzreichweitige Kommunikation eine Nahfeldkommunikation, eine Bluetooth-Kommunikation, eine Hochfrequenzidentifizierungskommunikation oder eine Infrarotkommunikation umfasst und wobei die Anwenderinformationen des zweiten Anwenders eine Mobiltelefonnummer, ein Geschäftskonto oder Identitätszertifikatinformationen umfassen; und
Senden (S205) einer Verifizierungsanforderung, die die erhaltenen Anwenderinformationen des zweiten Anwenders und Kennungsinformationen der digitalen Zimmerkarte umfasst, an den Geschäftsserver, damit der Geschäftsserver eine Verifizierung ausführt, dass der zweite Anwender ein verifizierter Anwender ist, der zugelassen ist, die digitale Zimmerkarte zum Entriegeln des intelligenten Türschlosses des Zimmers zu verwenden, wobei die Verifizierung das Angleichen an die Anwenderinformationen des zweiten Anwenders in Übereinstimmung mit vorgespeicherten Geschäftsinformationen und das Senden der digitalen Zimmerkarte an das Endgerät des zweiten Anwenders, nachdem die Verifizierung erfolgreich war, umfasst.

2. Verfahren nach Anspruch 1, wobei das Endgerät des ersten Anwenders die digitale Zimmerkarte, die durch den Geschäftsserver gesendet wird, über die folgende Vorgehensweise im Voraus erhält:
Senden einer Geschäftsanforderung, die Anwenderinformationen des ersten Anwenders übermittelt, an den Geschäftsserver; und
Empfangen der digitalen Zimmerkarte, die auf der Grundlage der Anwenderinformationen des ersten Anwenders durch den Geschäftsserver erzeugt und geliefert worden ist.

3. Verfahren nach Anspruch 1, wobei das Erhalten der Anwenderinformationen des zweiten Anwenders über kurzreichweitige Kommunikation genauer Folgendes umfasst:
Bestimmen eines Anwenders in einem Bereich der kurzreichweitigen Kommunikation als der zweite Anwender, der der Operation der gemeinsamen Benutzung entspricht; und
Erhalten der Anwenderinformationen des zweiten Anwenders über die kurzreichweitige Kommunikation.

4. Verfahren, das durch einen Geschäftsserver ausgeführt wird, zum Senden einer digitalen Zimmerkarte, die einem ersten Anwender zugeordnet ist, an ein Endgerät eines zweiten Anwenders, wobei das Verfahren Folgendes umfasst:
Empfangen (S301) einer Verifizierungsanforderung, die Kennungsinformationen der digitalen Zimmerkarte und Anwenderinformationen des zweiten Anwenders übermittelt, von einem Endgerät des ersten Anwenders, wobei die digitale Zimmerkarte durch den Geschäftsserver im Voraus an das Endgerät des ersten Anwenders gesendet wird und ermöglicht, ein intelligentes Türschloss eines entsprechenden Zimmers zu entriegeln, wobei die Anwenderinformationen des zweiten Anwenders durch das Endgerät des ersten Anwenders über kurzreichweitige Kommunikation mit dem Endgerät des zweiten Anwenders erhalten werden, wobei die kurzreichweitige Kommunikation eine Nahfeldkommunikation, eine Bluetooth-Kommunikation, eine Hochfrequenzidentifizierungskommunikation oder eine Infrarotkommunikation umfasst und wobei die Anwenderinformationen des zweiten Anwenders eine Mobiltelefonnummer, ein Geschäftskonto oder Identitätszertifikatinformationen umfassen;
Ausführen (S303) einer Verifizierung, dass der zweite Anwender ein verifizierter Anwender ist, der zugelassen ist, die digitale Zimmerkarte zum Entriegeln des intelligenten Türschlosses des Zimmers zu verwenden, wobei die Verifizierung das Angleichen an die Anwenderinformationen des zweiten Anwenders in Übereinstimmung mit vorgespeicherten Geschäftsinformationen umfasst; und
Bestimmen (S305) der digitalen Zimmerkarte, die in Übereinstimmung mit den in der Verifizierungsanforderung übermittelten Kennungsinformationen identifiziert worden ist, und Senden der digitalen Zimmerkarte an das Endgerät des zweiten Anwenders, wenn die Verifizierung erfolgreich ist.

5. Verfahren nach Anspruch 4, wobei das Ausführen der Verifizierung, dass der zweite Anwender der verifizierte Anwender ist, der zugelassen ist, die digitale Zimmerkarte zum Entriegeln des intelligenten Türschlosses des Zimmers zu verwenden, Folgendes umfasst:
Bestimmen, dass die Verifizierung erfolgreich ist, falls die Anwenderinformationen des zweiten Anwenders mit den vorgespeicherten Anwenderinformationen vereinbar sind; und
Bestimmen, dass die Verifizierung fehlschlägt, falls die Anwenderinformationen des zweiten Anwenders mit den vorgespeicherten Anwenderinformationen nicht vereinbar sind.

6. Verfahren nach Anspruch 4, wobei das Senden der digitalen Zimmerkarte an das Endgerät des zweiten Anwenders genauer Folgendes umfasst:
Senden der digitalen Zimmerkarte an die Mobiltelefonnummer in Form einer Kurznachricht, wenn die Anwenderinformationen des zweiten Anwenders eine Mobiltelefonnummer umfassen.

7. Verfahren nach Anspruch 4, wobei das Senden der digitalen Zimmerkarte an das Endgerät des zweiten Anwenders genauer Folgendes umfasst:
Senden der digitalen Zimmerkarte an das Geschäftskonto, wenn die Anwenderinformationen des zweiten Anwenders ein Geschäftskonto umfassen.

8. Computerprogrammprodukt zum Senden einer digitalen Zimmerkarte, wobei das Computerprogrammprodukt Anweisungen umfasst, die, wenn das Computerprogramm durch eine Endgerätvorrichtung ausgeführt wird, veranlassen, dass die Endgerätvorrichtung das Verfahren nach einem der Ansprüche 1 bis 3 ausführt.

9. Endgerätvorrichtung, die einen Prozessor umfasst, der konfiguriert ist, das Verfahren nach einem der Ansprüche 1 bis 3 auszuführen.

10. Computerprogrammprodukt zum Senden einer digitalen Zimmerkarte, wobei das Computerprogrammprodukt Anweisungen umfasst, die, wenn das Computerprogramm durch einen Server ausgeführt wird, veranlassen, dass der Server das Verfahren nach einem der Ansprüche 4 bis 7 ausführt.

11. Server, der einen Prozessor umfasst, der konfiguriert ist, das Verfahren nach einem der Ansprüche 4 bis 7 auszuführen.

## Revendications

1. Procédé, réalisé par un terminal d'un premier utilisateur, de transmission d'une carte de chambre numérique à un terminal d'un deuxième utilisateur, le procédé comprenant :
la réception (S201), par le biais d'une interface de partage affichée sur le terminal du premier utilisateur, d'une opération de partage pour le partage de la carte de chambre numérique avec le deuxième utilisateur, la carte de chambre numérique étant envoyée à l'avance par un serveur d'entreprise au terminal du premier utilisateur et permettant de déverrouiller un verrou de porte intelligent d'une chambre correspondante,
en réponse, l'obtention (S203) d'informations d'utilisateur relatives au deuxième utilisateur au moyen d'une communication à courte portée, comprenant la réalisation, au moyen de la communication à courte portée, d'une communication d'informations avec le terminal du deuxième utilisateur pour obtenir les informations d'utilisateur relatives au deuxième utilisateur, la communication à courte portée comprenant une communication en champ proche, une communication Bluetooth, une communication d'identification radiofréquence ou une communication infrarouge et les informations d'utilisateur relatives au deuxième utilisateur comprenant un numéro de téléphone mobile, un compte d'entreprise ou des informations de certificat d'identité ; et
l'envoi (S205) d'une requête de vérification comprenant les informations d'utilisateur obtenues relatives au deuxième utilisateur et des informations d'identifiant relatives à la carte de chambre numérique au serveur d'entreprise, pour permettre au serveur d'entreprise de réaliser une vérification que le deuxième utilisateur est un utilisateur vérifié qui est autorisé à utiliser la carte de chambre numérique pour déverrouiller le verrou de porte intelligent de la chambre, la vérification comprenant l'appariement des informations d'utilisateur relatives au deuxième utilisateur avec des informations d'entreprise préenregistrées, et d'envoyer la carte de chambre numérique au terminal du deuxième utilisateur en cas de succès de la vérification.

2. Procédé selon la revendication 1, dans lequel le terminal du premier utilisateur obtient à l'avance la carte de chambre numérique envoyée par le serveur d'entreprise par le biais de la méthode suivante :
l'envoi, au serveur d'entreprise, d'une requête d'entreprise véhiculant des informations d'utilisateur relatives au premier utilisateur ; et
la réception de la carte de chambre numérique générée et délivrée par le serveur d'entreprise sur la base des informations d'utilisateur relatives au premier utilisateur.

3. Procédé selon la revendication 1, dans lequel l'obtention des informations d'utilisateur relatives au deuxième utilisateur au moyen d'une communication à courte portée comprend plus particulièrement :
la détermination d'un utilisateur à portée de communication à courte portée comme le deuxième utilisateur correspondant à l'opération de partage ; et
l'obtention des informations d'utilisateur relatives au deuxième utilisateur au moyen de la communication à courte portée.

4. Procédé, réalisé par un serveur d'entreprise, de transmission d'une carte de chambre numérique associée à un premier utilisateur à un terminal d'un deuxième utilisateur, comprenant :
la réception (S301), depuis un terminal du premier utilisateur, d'une requête de vérification véhiculant une information d'identifiant de la carte de chambre numérique et des informations d'utilisateur relatives au deuxième utilisateur, la carte de chambre numérique étant envoyée à l'avance par le serveur d'entreprise au terminal du premier utilisateur et permettant de déverrouiller un verrou de porte intelligent d'une chambre correspondante, les informations d'utilisateur relatives au deuxième utilisateur étant obtenues par le terminal du premier utilisateur au moyen d'une communication à courte portée avec le terminal du deuxième utilisateur, la communication à courte portée comprenant une communication en champ proche, une communication Bluetooth, une communication d'identification radiofréquence ou une communication infrarouge et les informations d'utilisateur relatives au deuxième utilisateur comprenant un numéro de téléphone mobile, un compte d'entreprise ou des informations de certificat d'identité ;
la réalisation (S303) d'une vérification que le deuxième utilisateur est un utilisateur vérifié qui est autorisé à utiliser la carte de chambre numérique pour déverrouiller le verrou de porte intelligent de la chambre, la vérification comprenant l'appariement des informations d'utilisateur relatives au deuxième utilisateur avec des informations d'entreprise préenregistrées ; et
en cas de succès de la vérification, la détermination (S305) de la carte de chambre numérique identifiée selon l'information d'identifiant véhiculée dans la requête de vérification et l'envoi de la carte de chambre numérique au terminal du deuxième utilisateur.

5. Procédé selon la revendication 4, dans lequel la réalisation de la vérification que le deuxième utilisateur est l'utilisateur vérifié qui est autorisé à utiliser la carte de chambre numérique pour déverrouiller le verrou de porte intelligent de la chambre comprend :
si les informations d'utilisateur relatives aux deuxième utilisateur sont conformes aux informations d'utilisateur préenregistrées, la détermination que la vérification est un succès ; et
si les informations d'utilisateur relatives aux deuxième utilisateur ne sont pas conformes aux informations d'utilisateur préenregistrées, la détermination que la vérification est un échec.

6. Procédé selon la revendication 4, dans lequel l'envoi de la carte de chambre numérique au terminal du deuxième utilisateur comprend plus particulièrement :
l'envoi, lorsque les informations d'utilisateur relatives au deuxième utilisateur comprennent un numéro de téléphone mobile, de la carte de chambre numérique au numéro de téléphone mobile sous la forme d'un message court.

7. Procédé selon la revendication 4, dans lequel l'envoi de la carte de chambre numérique au terminal du deuxième utilisateur comprend plus particulièrement :
l'envoi, lorsque les informations d'utilisateur relatives au deuxième utilisateur comprennent un compte d'entreprise, de la carte de chambre numérique au compte d'entreprise.

8. Produit-programme d'ordinateur pour la transmission d'une carte de chambre numérique, le produit-programme d'ordinateur comprenant des instructions qui, lorsque le programme d'ordinateur est exécuté par un dispositif terminal, amènent le dispositif terminal à mettre en œuvre le procédé selon l'une quelconque des revendications 1 à 3.

9. Dispositif terminal comprenant un processeur configuré pour mettre en œuvre le procédé selon l'une quelconque des revendications 1 à 3.

10. Produit-programme d'ordinateur pour la transmission d'une carte de chambre numérique, le produit-programme d'ordinateur comprenant des instructions qui, lorsque le programme d'ordinateur est exécuté par un serveur, amènent le serveur à mettre en œuvre le procédé selon l'une quelconque des revendications 4 à 7.

11. Serveur comprenant un processeur configuré pour mettre en œuvre le procédé selon l'une quelconque des revendications 4 à 7.
